# EUROPEAN PATENT SPECIFICATION

(11) **EP 0 596 896 B1**
(45) Date of publication and mention of the grant of the patent: **14.11.2001**
(21) Application number: 92912808.0
(22) Date of filing: 03.06.1992
(51) Int. Cl.: G02C 7/08, G02C 9/04

(54) **CUSTOMIZED CLIP-ON EYEGLASS ACCESSORY AND METHOD OF MANUFACTURE**
INDIVIDUELL HERGESTELLTER BRILLENVORSTECKER UND VERFAHREN ZU DESSEN HERSTELLUNG
ACCESSOIRE POUR LUNETTES REALISE SUR MESURE ET SE FIXANT PAR PINCEMENT ET PROCEDE DE REALISATION

(43) Date of publication of application: 18.05.1994
(73) Proprietor: SALK, David E., Berkeley, CA 94705 (US)
(72) Inventor: SALK, David E., Berkeley, CA 94705 (US)
(74) Representative: Linn, Samuel Jonathan
(86) International application number: US9204591
(87) International publication number: WO9324856

(56) References cited:
- DE-C- 812 726
- GB-A- 416 303
- GB-A- 514 076
- GB-A- 690 493
- GB-A- 729 482
- US-A- 1 558 715
- US-A- 1 909 796
- US-A- 2 065 458
- US-A- 2 678 584

## Description

### Technical Field

This invention relates to attachments for eyeglasses and more particularly to clip-on attachments that superimpose auxiliary optical elements in front of the lenses of eyeglasses.

### Background of the Invention

The optical properties of a particular pair of eye-glasses are fixed at the time of manufacture. The needs of the owner of the eyeglasses with respect to vision correction or vision modification vary under different conditions. For example, reduction of light intensity as provided by sunglasses is desirable at certain times and locations but not at others. In some situations, such as where a person is operating a computer, a temporary increase in magnification can be helpful. Wearing of yellow tinted glasses can aid night vision but this may not be desirable during the daytime or in the presence of indoor lighting.

Obtaining two or more pairs of eyeglasses for use under different conditions is costly particularly in the case of prescription eyeglasses that are fabricated to meet the specialized needs of the particular person. It is simpler and more economical to use attachments of the type that can be temporarily clipped onto the person's basic vision correcting eyeglasses at times when reduced light intensity or other vision modification is needed.

Prior clip-on eyeglass accessories of this kind have not been entirely satisfactory for several reasons.

For example, eyeglasses are made in a variety of sizes and a variety of configurations. Further, the configuration of eyeglasses tends to vary from time to time because of changes in fashion or for other reasons. Many prior clip-on accessories are mass produced in one size and shape or a limited number of sizes and shapes. Consequently the optical elements of such accessories often do not have the same configuration and spacing as the lenses of the eyeglasses with which they are used. This disconformity can cause several problems. Undersized optical elements and optical elements that are out of register with the eyeglass lenses tend to disrupt the wearer's field of view and also present an anesthetic appearance to others. Oversized optical elements may contact the wearer's skin in an irritating manner and have projecting edges that may promote dislodgement of the accessory from the eyeglasses.

In order to alleviate these problems, some manufacturers of eyeglass frames provide clip-on sunglass accessories having optical elements that conform with the lenses and lens spacings of a particular frame. Prior conforming clip-on accessories of this kind are largely limited to use with the specific frame configuration for which the accessory was designed or at best are suitable for use with a limited number of frames that have closely similar configurations. Dispensing opticians typically offer a variety of different frame styles and stocking of a correspondingly large inventory of different clip-on accessories is costly and an operational complication. As a practical matter, such conformed clip-on accessories may not be available for many models of eyeglass frame.

US-A-1909796 discloses a device for use by those who wear eye-glasses comprising a pair of coloured lenses made of crystal clear glass set in aluminium rims, the rims being bridged by a spring wire which urges the rims into a secure relation with the eye-glasses to which the goggles are attached.

The prior conformed clip-on accessories also have a costly construction which relies on rims on the optical elements to interconnect and secure the other components of the accessory such as a bridge member and clasps for engaging the eyeglasses.

The present invention is directed to overcoming one or more of the problems discussed above.

### Summary of the Invention

In a first aspect the present invention provides a customized clip-on accessory for superimposing auxiliary optical elements on the lenses of a particular pair of eyeglasses, which eyeglasses have spaced apart first and second lens regions and a frame member extending therebetween, the accessory comprising: first and second spaced apart auxiliary optical elements, a resilient bridge member extending between said first and second optical elements and extending along at least a portion of the top edge of each of said optical elements, first and second clasps secured to opposite end regions of said bridge member and each being attached to the top edge of the adjacent one of said optical elements, each of said first and second clasps having an eyeglass engaging pin extending rearwardly therefrom, third and fourth clasps attached to separate ones of said first and second optical elements at locations thereon that are spaced downwardly from the locations of said first and second clasps and which are spaced further apart than the locations of said first and second clasps, said third and fourth clasps also having eyeglass engaging pins extending rearwardly therefrom, characterised in that: the attachments of said third and fourth clasps to said optical elements are independent of the attachments of said first and second clasps thereto; the first and second spaced apart auxiliary optical elements are trimmed to have perimeters that conform substantially with said lens regions of said particular pair of eyeglasses; and the third and fourth clasps are attached to the respective perimeters of the optical elements after they have been trimmed to conform substantially with said lens regions of said particular pair of eyeglasses.

In a second aspect, the present invention provides a method of custom fabricating a clip-on accessory for engagement on a particular pair of eyeglasses according to Claim 10.

In a further aspect, the invention provides a kit for enabling assembly of a clip-on accessory that is custom fitted to a specific pair of eyeglasses according to claim 18.

The invention provides a customized clip-on eyeglass accessory that can be easily and economically assembled into any of a variety of sizes and configurations, to conform with eyeglasses of diverse different shapes, using the same set of starting components. The starting components can, if desired, be packaged in a kit to facilitate the fabrication of customized clip-on accessories by dispensing opticians or others. In the preferred form, the accessory snaps onto and securely grips the eyeglasses and is held in precise registration with the eyeglass lenses by clasps which also function to secure the optical elements and a bridge member together. Structural integrity is not dependent on rims and the accessory can have an inexpensive construction. In the preferred form, components can easily be disassembled and at least in part can be reused to form an accessory of different configuration when the owner acquires new eyeglasses.

The invention, together with further aspects and advantages thereof, may be further understood by reference to the following description of the preferred embodiment and by reference to the accompanying drawings.

### Brief Description of the Drawings

FIG. 1 is a perspective view of a pair of eyeglasses and a clip-on accessory as customized for use with the particular pair of eyeglasses, the accessory being shown detached from the eyeglasses.
FIG. 2 is a side elevation view of the forward region of the apparatus of FIG. 1 with the clip-on accessory being shown engaged on the eyeglasses.
FIG. 3 is a section view of a eyeglass gripping clasp component of the apparatus of the preceding figures.
FIG. 5 is a diagramatic illustration of successive steps in a method for fabricating the clip-on accessory of the preceding figures.

### Detailed Description of the Preferred Embodiment

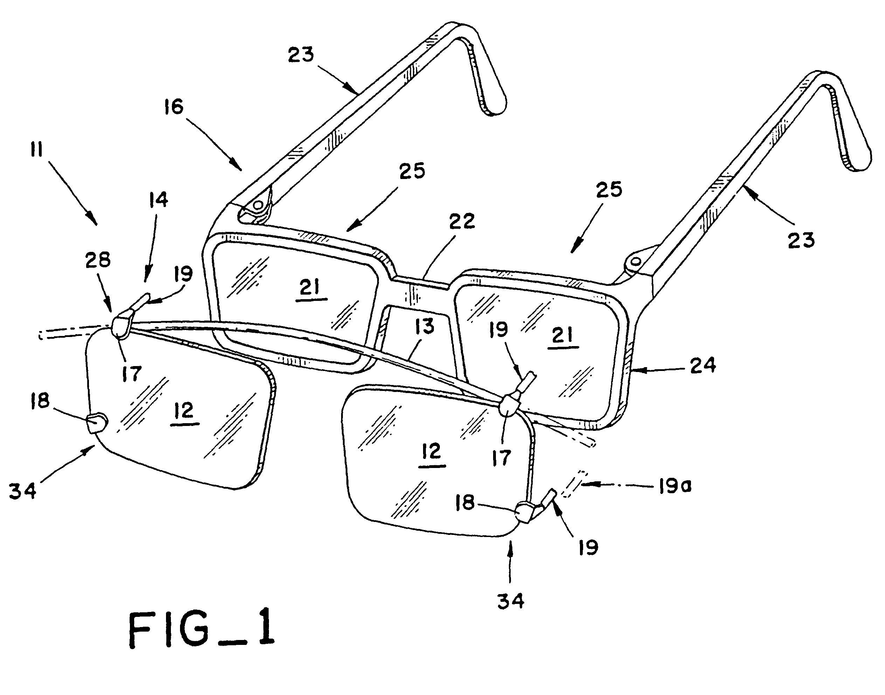

Referring initially to FIG. 1 of the drawings, the clip-on eyeglass accessory 11 of this particular example of the invention is a sunglass accessory and thus has spaced apart optical elements 12 which are of the light reducing type. The optical elements 12 may serve other purposes, examples of which have been previously described and thus are not necessarily of the light reducing type in all embodiments of the invention.

Optical elements 12 are interconnected by a bridge member 13 which extends between the upper edge regions of the elements. Means 14 are provided for fastening the accessory 11 to the front of a pair of eyeglasses 16 and in the preferred form of the invention such means includes an upper pair of clasps 17 and a lower pair of clasps 18. Clasps 17 and 18 are fastened to the edges of optical elements 12 and each clasp has a rearwardly extending eyeglass engaging pin 19.

The eyeglasses 16 with which the accessory 11 is used may be of any of the conventional constructions and thus typically includes a pair of spaced apart vision correcting lenses 21, interconnected by a frame member 22, and pivotable temple members 23 which extend rearwardly at opposite sides of the eyeglasses. The particular pair of eyeglasses 16 shown in the drawings for purposes of example has rims 24, integral with frame member 22, that extend around the perimeters of lenses 21 but the accessory 11 is equally compatible with rim-less eyeglasses.

Clip-on accessory 11 is fabricated from a group of components, which will hereinafter be described in more detail, that enable the accessory to be customized to eye-glasses 16 of diverse different configurations and sizes. When customized in this manner, the perimeters of the optical elements 12 have outlines conforming to the perimeters of the lens regions 25 of the eyeglasses and a spacing which conforms to the spacing of the lens regions. The means 14 for fastening accessory 11 to eyeglasses 16 acts to hold the optical elements 12 in registration with the eyeglass lenses 21.

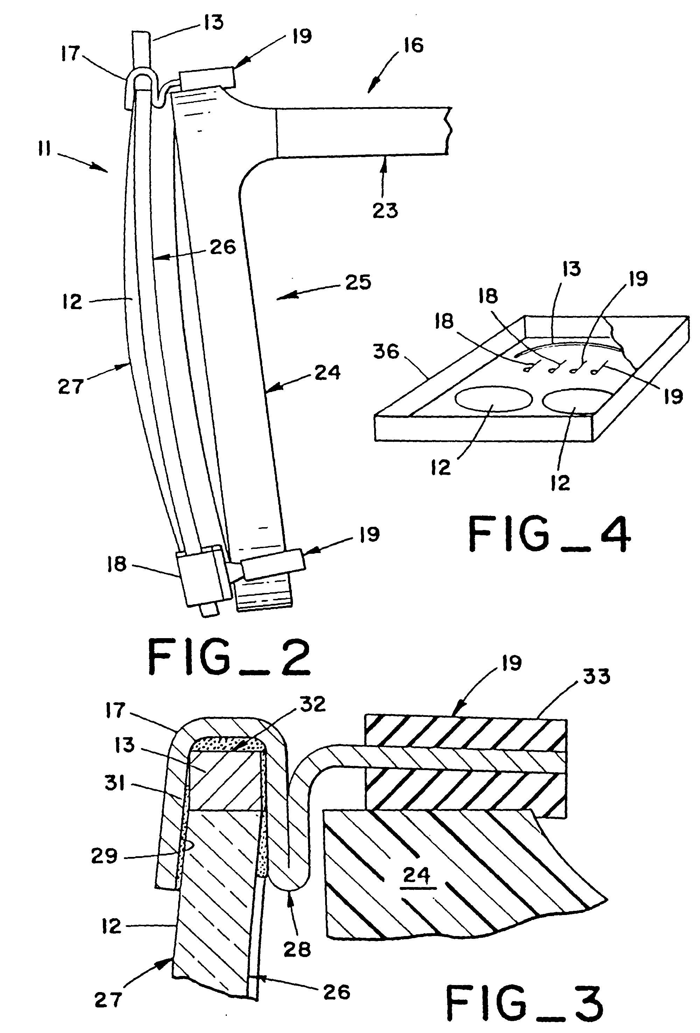

Referring jointly to FIGS. 2 and 3, the optical elements 12 are preferably slightly concave at the back 26 and slightly convex at the front 27 to conform with the typical eyeglass lens 21 and to avoid optical distortion although this is not essential in all cases. The elements 12 may be formed of plastic or glass of any of the known types that are used in the manufacture of eyeglass lenses.

Referring jointly to FIGS 1 and 3, the upper and lower clasps 17 and 18 have the same configuration in this embodiment and each includes a clasp member 28 formed to provide a transverse passage 29 of U-shaped cross section at the forward region of the member which passage extends completely through the clasp member. Passage 29 is proportioned to enable entry of an edge region of one of the optical elements 12 into the passage and to receive a quantity of adhesive 31, such as epoxy for example, to secure the clasp 17 or 18 to the optical element. The passage 29 is further proportioned to enable entry of an end 32 of bridge member 13 into the passages of the two upper clasps 19. Adhesive 31 secures the upper clasps 17 to the bridge member 13 within the passages 29.

The eyeglass engaging pins 19 are rearwardly extending portions of the clasps 17 and 18 each of which is encircled by a small sleeve 33 of rubber or similar material that is secured to the member.

Referring to FIG. 1 in particular, the upper clasps 17 are fastened to the upper edge regions of optical elements 12 and the lower clasps 18 are fastened to side edges of the optical elements at locations which are below those of the upper clasps, the lower clasps being at the rounded outer corners 34 of the bottom region of the elements in this example.

Bridge member 13 is formed of resilient material such as spring steel and preferably is upwardly bowed when in an undistorted condition. Prior to fastening of the accessory 11 onto eyeglasses 16, the resilient bridge member 13 assumes a relaxed or undistorted configuration at which the lower regions of the optical elements 12 including the lower clasps 18 are slightly closer together than is the case when the accessory has been fitted onto the eyeglasses. This provides for ease of installation of the accessory 11 onto eyeglasses 16 and provides for a highly secure gripping of the eyeglasses that resists dislodging of the accessory.

In particular, installation is facilitated in that the upper eyeglass engaging pins 19 may be rested on the tops of the lens rims 24 over each lens 21. Manual depression of the center of bridge member 13 then pivots the lower pair of pins 19 away from each other to the positions indicated by dashed lines 19a in FIG. 1. At these positions 19a, the force that is being exerted on bridge member 13 pivots the lower pins 19 backward alongside the lower outer corners of the lens rim 24. Upon release of the bridge member 13, the resiliency of the member draws all four pins 19 tightly against the lens rim 24 thereby assuring a strong gripping of the eyeglasses 16 by the accessory 11. Detachment of the accessory 11 from eye-glasses 16 is easily accomplished by again depressing the center of bridge member 13 and then moving the accessory 11 in a forward direction.

Referring to FIG. 4, starting components for fabricating a clip-on accessory 11 that is customized to a particular pair of eyeglasses include a bridge member 13, two optical elements 12 and four clasps 18, 19. These components are similar to those previously described except that bridge member 13 is initially longer than is required for the particular eyeglasses and optical elements 12 initially have a greater area or extent than is needed for the particular eyeglasses. Preferably, bridge member 13 is sufficiently long to accommodate to the widest eyeglasses that are manufactured and optical elements 12 are of sufficient size to cover the largest lenses that are used in eyeglasses. Alternately, in the interests of economizing on materials, the bridge members 13 and optical elements 12 may be manufactured and marketed in two or more different sizes.

For the convenience of optical technicians or others who fabricate the clip-on accessory 11, the components needed for construction of a single accessory can be assembled as a kit with the components preferably being enclosed in a container or package 36.

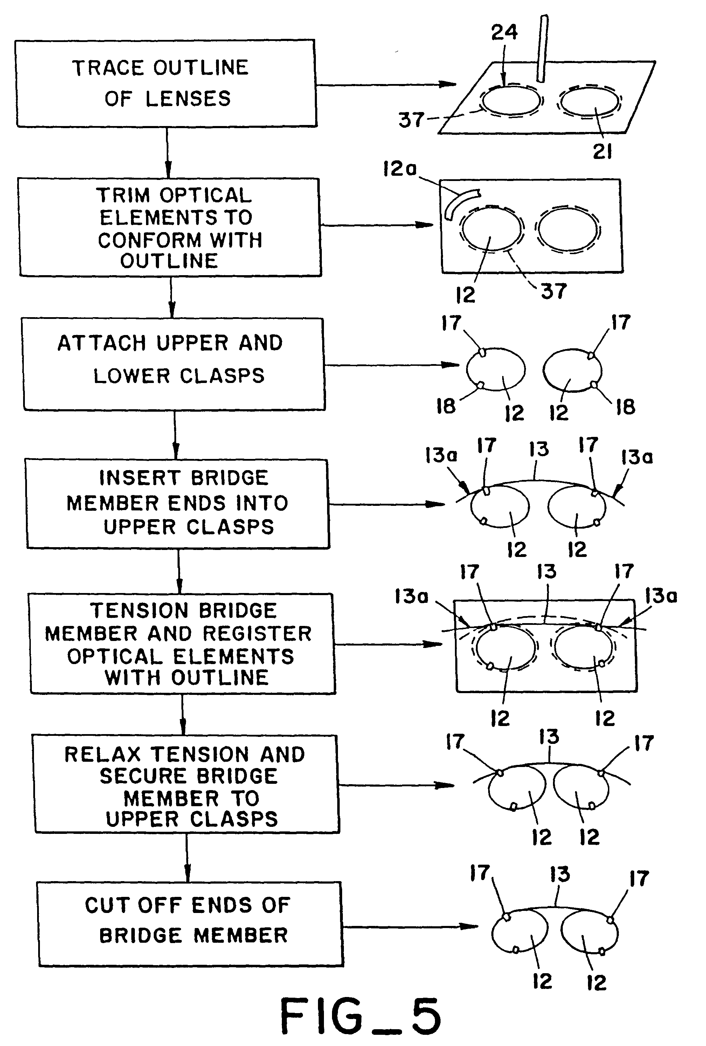

Referring to FIG. 5, steps in the method of fabricating a clip-on accessory from the above described components include preparing an outline 37 which conforms with the optical element shape that is needed to customize the accessory 11 to a particular pair of eyeglasses. Preferably the outline 37 conforms substantially with the perimeters of the lenses 21 although in some cases it may be desirable to conform the optical elements with the inside or outside perimeters of the lens framing of the pair of eyeglasses.

The lenses 21 may be temporarily removed from the frames in instances where it is desired to conform the perimeters of the optical elements with the perimeters of the lenses. The outlines of the lenses 21 may then be traced onto paper or onto thicker template material or in some cases onto the optical elements themselves depending on the tools that are to be used to trim the elements into their final form. In instances where the manufacturer of the eyeglass frames provides a pattern displaying the configuration of the lenses 21, the pattern may itself provide the outline. The outline 37 may also be prepared by using known pattern making mechanisms which sense the configuration of lens edge receiving grooves in eyeglass frames.

As the lenses 21 of eyeglasses 16 are usually symmetrical, it is possible to use a single outline from one lens 21 that is turned over and reversed from side to side when the optical element corresponding to the other lens is to be trimmed. However, an outline 37 of both lenses that also shows the lens spacing needed to customize the accessory 11 can facilitate further steps which will be hereinafter described.

Outline 37 may be a tracing prepared from the lens regions of the eyeglass frame, rather than the lenses, if the optical elements 12 are to conform with the inside or outside perimeter of the lens framing.

Marginal regions 12a of the optical elemens 12 are then trimmed away to conform the perimeters of the elements with the outline 37. Any of a variety of cutting or grinding tools can be used to trim the elements 12 but preferably the outline 37 is prepared in the form of a template and known automatic tools which cut workpieces into outlines conforming with a template are used to perform the operation.

Upper and lower clasps 17 and 18 are then fastened to the edge regions of the two optical elements 12 at the described locations. This is preferably done with epoxy or other adhesive but other forms of engagement may be used such as screws, set screws or the like. The edges of the optical elements 12 are not seated all the way into the top of the internal passages 29 of the upper clasps 17 and the upper regions of such passages are left free of adhesive at this stage. This leaves the upper regions of passages 29 of upper clasps 17 free to receive the bridge member 13.

Following hardening of the adhesive 31, opposite end portions 13a of bridge member 13 are inserted into the passages 29 of the two upper clasps 17. The trimmed optical elements 12, carrying the bridge member 13, are then arranged in a spaced apart relationship corresponding to the spacing of the lens regions of the eyeglasses and in angular orientations similar to those of the lens regions. This can be accomplished by placing elements 12 over the previously traced outline 37 and sliding one or both of the clasps 17 along bridge member 13 to effect the desired spacing. Alternately, this may be accomplished by placing the elements 12 on the eyeglasses themselves and sliding one or both clasps 17 as necessary to bring the elements into register with the eyeglass lenses. This can be accomplished by sliding only one of the clasps 17 if bridge member 13 has a strictly circular curvature. Sliding of both clasps 17 is desirable in instances where the bridge member 13 has a symmetrical but non-circular curvature.

Bridge member 13 is tensioned while the optical elements 12 are held in the above described relationship to each other. In particular, pressure is exerted on the center of the resilient bridge member 13 in a direction which decreases the curvature of the member. This causes a small sliding movement of one or both end portions 13a of the bridge member 13 within the passages 29 of upper clasps 17. The tension in bridge member 13 is then relaxed while taking care to assure that the upper clasps 17 do not undergo any longitudinal movement along the member as relaxation of the member is occurring. As the curvature of bridge member 13 increases as relaxation occurs, the motion of the bridge member pivots the two optical elements 12 towards each other and reduces the spacing of the lower pins 19 by a small amount. Adhesive is then introduced into the upper regions of the upper clasp passages 29 to secure the bridge member 13 and clasps 17 to each other or the components are secured together by other means.

After the adhesive has cured, the end portions of bridge member 13 that protrude from clasps 17 at the sides of the eyeglasses 16 are cut off.

The above described steps cause the optical elements 12 to have a closer spacing than the lenses 12 of eye-glasses 16 when the accessory 11 is disengaged from the eyeglasses and the resilient bridge member 13 is in a relaxed condition. Consequently, it is necessary to force the resilient bridge member 13 into a less curved configuration in order to fit the accessory 11 onto the eye-glasses 16. This distortion of the bridge member 13 spreads the lower eyeglass engaging pins 19 and shifts the optical elements 12 back towards the orientations at which they register with the lenses 21 of the eyeglasses 16. The distortion also creates resilient tension in the bridge member 13 that causes the accessory 11 to grip the eyeglasses 16 tightly.

As previously described, distorting of bridge member 13 for the purpose of fitting the clip-on accessory 11 onto eyeglasses 16 is most easily accomplished by resting the upper engaging pins 19 on the tops of the lens rims 24 and momentarily pinching the center of bridge member 13 and center frame member 22 of the eyeglasses with the thumb and forefinger. This causes the lower eyeglass engaging pins 19 to spread and creates a pivoting force on the accessory 11 that results in a snap action engagement onto the eyeglasses 16.

Optionally, rims or edging simulating rims may be provided on the optical elements 12 for decorative purposes. However, the accessory 11 does not require rims for structural reasons. The upper clasps 17 secure the optical elements 12 and bridge member 13 together and the lower clasps 18 are independently joined to the optical elements.

The above described construction of the clip-on accessory 11 enables disassembly, by dissolving the adhesive with acetone or other appropriate solvent, and reuse of some or all of the components to form a new customized accessory when the owner acquires a new pair of eyeglasses of different configuration. New optical elements 12 may be needed if the lenses of the new eyeglasses are larger than those of the prior eyeglasses but this is often not the case.

While the invention has been described with reference to a single embodiment for purposes of example, many modifications or variations of the accessory and the method of fabricating the accessory are possible and it is not intended to limit the invention except as defined in the following claims.

## Claims

1. A customized clip-on accessory (11) for superimposing auxiliary optical elements (12) on the lenses (21) of a particular pair of eyeglasses (16), which eyeglasses (16) have spaced apart first and second lens regions (25) and a frame member (22) extending therebetween, the accessory comprising:
first and second spaced apart auxiliary optical elements (12),
a resilient bridge member (13) extending between said first and second optical elements (12) and extending along at least a portion of the top edge of each of said optical elements (12),
first and second clasps (17) secured to opposite end regions of said bridge member (13) and each being attached to the top edge of the adjacent one of said optical elements (12), each of said first and second clasps (17) having an eyeglass engaging pin (19) extending rearwardly therefrom,
third and fourth clasps (18) attached to separate ones of said first and second optical elements (12) at locations thereon that are spaced downwardly from the locations of said first and second clasps (17) and which are spaced further apart than the locations of said first and second clasps (17), said third and fourth clasps (18) also having eyeglass engaging pins (19) extending rearwardly therefrom, **characterised in that**: the attachments of said third and fourth clasps (18) to said optical elements (12) are independent of the attachments of said first and second clasps (17) thereto;
the first and second spaced apart auxiliary optical elements are trimmed to have perimeters that conform substantially with said lens regions (25) of said particular pair of eyeglasses (16); and the third and fourth clasps are attached to the respective perimeters of the optical elements after they have been trimmed to conform substantially with said lens regions (25) of said particular pair of eyeglasses (16).

2. The clip-on accessory of claim 1 wherein said first and second clasps each have a transverse passage (29) of inverted U-shaped cross section, said top edges of said optical elements (12) being received in said passages.

3. The clip-on accessory of claim 2 further including hardened adhesive (31) disposed in said passages (29) of said first and second clasps (17) to secure said clasps to said optical elements (12), said adhesive (31) being of a type which is soluble by a solvent whereby said accessory may be disassembled and components thereof may be reassembled into another clip-on accessory having different proportions.

4. The clip-on accessory (11) of claim 1 wherein said resilient bridge member (13) is under tension when engaged on said eyeglasses (16) and draws said optical elements (12) closer together when removed from said eyeglasses (16).

5. A clip-on accessory (11) according to claim 1 wherein said bridge member (13) has a length that is adjustable during assembly of said accessory (11) to position said optical elements (12) in register with said lens region (25) of said particular pair of eyeglasses (15).

6. A customized clip-on accessory (11) according to claim 1 or claim 2 wherein at least one of the first and second clasps (17) have means for enabling securing of the clasp at a selected location along said bridge member (13) during assembly of said accessory (11).

7. The clip-on accessory (11) according to claim 6 as dependent on claim 2 wherein said passage (29) extends completely through the clasp whereby the clasp may be slid along said bridge member (13) during assembly of said accessory (11) to select said length of said bridge member (13).

8. The clip-on accessory (11) of claim 7 wherein said edges of said optical elements (12) are received in the lower portions of said passages (29) and said ends of said bridge member (13) being received in the upper portions of said passages (29).

9. The clip-on accessory (11) of claim 3 wherein the hardened adhesive (31) secures said ends of said bridge member to said clasps.

10. A method of custom fabricating a clip-on accessory (11) for engagement on a particular pair of eyeglasses (16) using components that are initially adaptable to a variety of different eyeglass configurations, comprising the steps of:
preparing an outline (37) of the lens regions (25) of the particular pair of eyeglasses (16),
conforming a pair of auxiliary optical elements (2) with said outline by trimming marginal regions away from optical elements that are initially of greater extent than said lens regions (25),
registering said trimmed optical elements (12) with the outline of said lens regions to cause said optical elements to have a selected spacing that corresponds to the spacing of said lens regions (25) of said eyeglasses (16), and
linking said optical elements (12) together by extending a resilient bridge member (13) therebetween and along at least a portion of the top edge of each of said optical elements (12) and by attaching end regions of said bridge member (13) to the top edges of said optical elements (12) with first and second clasps (17) secured to opposite end regions of said bridge member (13) and each being attached to the top edge of the adjacent one of said optical elements (12),
third and fourth clasps (18) attaching to separate ones of said optical elements at locations thereon that are spaced downwardly from the locations of said first and second clasps (17), **characterised in that**: the attachments of said third and fourth clasps (18) to said optical elements (12) are independent of the attachments of said first and second clasps (17) thereto.

11. The method of claim 10 including the further step of applying pressure to said resilient bridge member (13) while said elements are at said selected spacing and subsequently releasing said pressure while preventing relative movement of said optical elements (12) and said clasps (17,18) whereby the lower portions of said optical elements (12) are drawn closer together by relaxation of said resilient bridge member (13).

12. A method according to claim 10 further comprising the steps of:
sliding at least one of said clasps (17) along the bridge member (13) to establish a selected spacing of the optical elements (12) that corresponds to the spacing of said lens regions (25) of said particular pair of eyeglasses (16).

13. The method of claim 12 including the further step of cutting off any end portions of said bridge member (13) which protrude from said clasps (17) following securing of said clasps to said bridge member (13).

14. The method of claim 10 wherein the clasps (17) are provided with eyeglass engaging pins (19) that extend rearwardly therefrom, including the further steps of securing one of a second pair of clasps (18) with rearwardly extending eyeglass engaging pins (19) to each of said optical elements (12) at locations thereon which are below said upper edge regions of said elements (12).

15. The method of claim 10 further including the step of utilizing a soluble adhesive (31) to secure said clasps (17) to said bridge member and including the further steps of adapting said accessory (11) to another pair of eyeglasses by dissolving said adhesive (31) and separating components of said accessory (11) and reassembling said components as an accessory of changed configuration.

16. The method of claim 12 further including the step of utilizing the upwardly bowed configuration of the bridge member (13) and further including the steps of:
applying pressure to said bridge member (13) to reduce the curvature thereof.

17. A method according to claim 10 which method further includes the steps of:
determining the spacing of said lens regions (21) from each other,
disposing opposite end portions of a resilient bridge member (13) in transverse passages (29) of the upper clasps (17).

18. A kit for enabling assembly of a clip-on accessory (11) that is custom fittable to a specific pair of eyeglasses (16) which eyeglasses have a pair of spaced apart vision correcting lenses (21) connected by a frame member (22), wherein said kit includes:
a pair of auxiliary optical elements (12) for disposition in front of the lens regions (25) of said eyeglasses (16) which optical elements (12) are each of greater size than said lenses (21),
a resilient bridge member (13) having a length sufficient to enable variation of the spacing of said optical elements (12) to accommodate to eyeglasses (16) of different sizes and configurations,
first and second clasps(17) adapted to be secured to opposite end regions of said bridge member (13) and each being attached to the top edge of the adjacent one of said optical elements (12),
third and fourth clasps (18) adapted to be attached to separate ones of said optical elements at locations thereon that are spaced downwardly from the locations of said first and second clasps (17), **characterised in that**: the attachments of said third and fourth clasps (18) to said optical elements (12) are independent of the attachments of said first and second clasps (17) thereto.

19. The kit according to claim 18 wherein the transverse passage (29) enables sliding of the clasp (17) along the bridge member during assembly.

## Patentansprüche

1. Individuell gefertigter Aufsatz (11) zum Aufsetzen optischer Hilfselemente (12) auf die Linsen (21) einer bestimmten Brille (16), wobei die Brille (16) einen ersten und einen zweiten Linsenbereich (25), die voneinander beabstandet sind, sowie ein Rahmenelement (22) aufweist das sich dazwischen erstreckt, wobei der Aufsatz umfasst:
ein erstes und zweiten optisches Hilfselement (12), die voneinander beabstandet sind,
ein elastisches Brückenelement (13), das sich zwischen dem ersten und dem zweiten optischen Element (12) erstreckt und sich entlang zumindest einem Abschnitt der Oberkante eines jeden der optischen Elemente (12) erstreckt,
eine erste und eine zweite Klammer (17), die an einander gegenüberliegenden Endbereichen des Brückenelements (13) befestigt sind und jeweils an der Oberkante des benachbarten der optischen Elemente (12) befestigt sind, wobei sowohl die erste aus auch die zweite Klammer (17) einen Brillen-Eingreifstift (19) aufweist, der sich davon nach hinten erstreckt,
eine dritte und eine vierte Klammer (18), die an getrennten aus dem ersten und dem zweiten optischen Element (12) an Positionen daran befestigt sind, die von den Positionen der ersten und der zweiten Klammer (17) nach unten beabstandet sind, wobei die dritte und die vierte Klammer (18) auch Brillen-Eingreifstifte (19) aufweist, die sich davon nach hinten erstrecken, **dadurch gekennzeichnet, dass** die Befestigungen der dritten und der vierten Klammer (18) an den optischen Elementen (12) unabhängig von den Befestigungen der ersten und der zweiten Klammer (17) daran sind;
wobei das erste und das zweite optische Hilfselement, die voneinander beabstandet sind, zurechtgeschnitten sind, so dass sie Umfänge aufweisen, die im Wesentlichen mit den Linsenbereichen (25) der bestimmten Brille (16) übereinstimmen, und die dritte und die vierte Klammer an den jeweiligen Umfängen der optischen Elemente befestigt werden, nachdem sie zurechtgeschnitten worden sind, um im Wesentlichen mit den Linsenbereichen (25) der bestimmten Brille (16) übereinzustimmen.

2. Aufsteckbarer Aufsatz nach Anspruch 1, worin die erste und die zweite Klammer jeweils einen quergerichteten Durchgang (29) in Querschnittsgestalt eines umgedrehten U aufweisen, wobei die Oberkanten der optischen Elemente (12) in den Durchgängen aufgenommen sind.

3. Aufsteckbarer Aufsatz nach Anspruch 2, der weiters einen gehärteten Kleber (31) umfasst, der sich in den Durchgängen (29) der ersten und der zweiten Klammer (17) befindet, um die Klammern an den optischen Elementen (12) zu befestigen, wobei der Kleber (31) einem Typ angehört, der mit einem Lösungsmittel lösbar ist, wodurch der Aufsatz zerlegt werden kann und seine Komponenten erneut zu einem anderen aufsteckbaren Aufsatz mit anderen Abmessungen zusammengebaut werden können.

4. Aufsteckbarer Aufsatz (11) nach Anspruch 1, worin sich das elastische Brückenelement (13) unter Zug-Spannung befindet, wenn es sich auf der Brille (16) in Eingriff befindet, und die optischen Elemente (12) näher zueinander zieht, wenn es von der Brille (16) abgenommen wird.

5. Aufsteckbarer Aufsatz (11) nach Anspruch 1, worin das Brückenelement (13) eine Länge aufweist, die während des Zusammenbauens des Aufsatzes (11) einstellbar ist, um die optischen Elemente (12) in Deckung mit dem Linsenbereich (25) der bestimmten Brille (16) auszurichten.

6. Individuell angefertigter aufsteckbarer Aufsatz (11) nach Anspruch 1 oder 2, worin zumindest eine aus der ersten und der zweiten Klammer (17) Mittel aufweist, die es ermöglichen, die Klammer während des Zusammenbauens des Aufsatzes (11) an einer ausgewählten Position entlang dem Brückenelement (13) zu befestigen.

7. Aufsteckbarer Aufsatz (11) nach Anspruch 6 in Abhängigkeit von Anspruch 2, worin sich der Durchgang (29) vollständig durch die Klammer hindurch erstreckt, wodurch die Klammer während des Zusammenbauens des Aufsatzes das Brückenelement (13) entlang gleiten kann, um die Länge des Brückenelements (13) zu wählen.

8. Aufsteckbarer Aufsatz (11) nach Anspruch 7, worin die Kanten der optischen Elemente (12) in den unteren Abschnitten der Durchgänge (29) aufgenommen sind und die Enden des Brückenelements (13) in den oberen Abschnitten der Durchgänge (29) aufgenommen sind.

9. Aufsteckbarer Aufsatz (11) nach Anspruch 3, worin der gehärtete Kleber (31) die Enden des Brückenelements an den Klammern befestigt.

10. Verfahren zur individuellen Fertigung eines aufsteckbaren Aufsatzes (11) zum Angreifen an einer bestimmten Brille (16) unter Einsatz von Komponenten, die zunächst an eine Vielzahl verschiedener Brillenkonfigurationen anpassbar sind, folgende Schritte umfassend:
das Herstellen einer Schablone (37) der Linsenbereiche (25) der bestimmten Brille (16),
das Übereinstimmen eines Paares optischer Hilfselemente (12) mit der Schablone durch Zurechtschneiden von Randbereichen von optischen Elementen, die zunächst eine größere Ausdehnung haben als die Linsenbereiche (25),
das deckende Ausrichten der zurechtgeschnittenen optischen Elemente (12) mit der Kontur der Linsenbereiche, um zu bewirken, dass die optischen Elemente einen gewählten Abstand aufweisen, der dem Abstand der Linsenbereiche (25) der Brille (16) entspricht, und
das Verbinden der optischen Elemente (12) miteinander durch Erstrecken eines elastischen Brückenelements (13) dazwischen und entlang zumindest einem Abschnitt der Oberkante eines jeden der optischen Elemente (12) und durch Befestigen von Endbereichen des Brückenelements (13) an den Oberkanten der optischen Elemente (12) mit einer ersten und einer zweiten Klammer (17), die an einander gegenüberliegenden Endbereichen des Brückenelements (13) befestigt werden und jeweils an der Oberkante des benachbarten der optischen Elemente (12) befestigt werden;
das Befestigen der dritten und der vierten Klammer (18) an getrennten der optischen Elemente an Positionen darauf, die von den Positionen der ersten und der zweiten Klammer (17) nach unten beabstandet sind, **dadurch gekennzeichnet, dass** die Befestigungen der dritten und der vierten Klammer (18) an den optischen Elementen (12) von den Befestigungen der ersten und der zweiten Klammer (17) daran unabhängig sind.

11. Verfahren nach Anspruch 10, das den weiteren Schritt der Druckausübung auf das elastische Brückenelement (13), während sich die Elemente in dem gewählten Abstand befinden, und daraufhin des Loslassens des Drucks umfasst, während Relativbewegung der optischen Elemente (12) und der Klammern (17, 18) verhindert wird, wodurch die unteren Abschnitte der optischen Elemente (12) durch Entspannen des elastischen Brückenelements (13) näher zu einander gezogen werden.

12. Verfahren nach Anspruch 10, weiters folgende Schritte umfassend:
das Verschieben zumindest einer der Klammern (17) das Brückenelement (13) entlang, um einen gewählten Abstand der optischen Elemente (12) herzustellen, der dem Abstand der Linsenbereiche (25) der bestimmten Brille (16) entspricht.

13. Verfahren nach Anspruch 12, umfassend den weiteren Schritt des Abschneidens jeglicher Endabschnitte des Brückenelements (13), die nach dem Befestigen der Klammern am Brückenelement (13) aus den Klammern (17) herausragen.

14. Verfahren nach Anspruch 10, worin die Klammern (17) mit Brillen-Eingreifstiften (19) versehen sind, die sich davon nach hinten erstrecken, umfassend die weiteren Schritte des Befestigens eines aus einem zweiten Paar von Klammern (18) mit sich nach hinten erstreckenden Brillen-Eingreifstiften (19) an jedem der optischen Elemente (12) an Positionen darauf, die sich unterhalb der oberen Kantenbereiche der Elemente (12) erstrecken.

15. Verfahren nach Anspruch 10, weiters umfassend den Schritt des Verwendens eines löslichen Klebers (31), um die Klammern (17) am Brückenelement zu befestigen, und umfassend die weiteren Schritte des Anpassens des Aufsatzes (11) an eine andere Brille durch Auflösen des Klebers (31) und Trennen von Komponenten des Aufsatzes (11) und des erneuten Zusammenbauens der Komponenten als Aufsatz mit geänderter Konfiguration.

16. Verfahren nach Anspruch 12, weiters umfassend den Schritt des Einsetzens einer nach oben gebogenen Konfiguration des Brückenelements (12) und weiters folgenden Schritt umfassend:
das Ausüben von Druck auf das Brückenelement (13), um dessen Krümmung zu verringern.

17. Verfahren nach Anspruch 10, wobei das Verfahren weiters folgende Schritte umfasst:
das Bestimmen des Abstands der Linsenbereiche (21) voneinander,
das Anordnen einander gegenüberliegender Endabschnitte eines elastischen Brückenelements (13) in quergerichteten Durchgängen (29) der oberen Klammern (17).

18. Bausatz, der das Zusammenbauen eines aufsteckbaren Aufsatzes (11) ermöglicht, der individuell an eine spezifische Brille (16) anpassbar ist, wobei die Brille ein Paar beabstandete, das Sehvermögen korrigierende Linsen (21) aufweist, die durch ein Rahmenelement (22) miteinander verbunden sind, wobei der Bausatz umfasst:
ein Paar optischer Hilfselemente (12) zur Anordnung vor den Linsenbereichen (25) der Brille (16), wobei die optischen Elemente (12) jeweils größer sind als die Linsen (21),
ein elastisches Brückenelement (13) mit ausreichender Länge, um eine Variation des Abstands der optischen Elemente (12) zu ermöglichen, um sie an Brillen (16) unterschiedlicher Größen und Konfigurationen anzupassen,
eine erste und eine zweite Klammer (17), die dazu ausgebildet sind, an einander gegenüberliegenden Endbereichen des Brückenelements (13) befestigt zu werden, und jeweils an der Oberkante des benachbarten der optischen Elemente (12) befestigt sind,
eine dritte und eine vierte Klammer (18), die dazu ausgebildet sind, an getrennten der optischen Elemente an Positionen darauf befestigt zu werden, die von den Positionen der ersten und zweiten Klammern (17) nach unten beabstandet sind, **dadurch gekennzeichnet, dass** die Befestigungen der dritten und der vierten Klammer (18) an den optischen Elementen (12) von den Befestigungen der ersten und der zweiten Klammer (17) daran unabhängig sind.

19. Bausatz nach Anspruch 18, worin der quergerichtete Durchgang (29) das Gleiten der Klammer (17) entlang dem Brückenelement während des Zusammenbauens ermöglicht.

## Revendications

1. Accessoire à pinces sur mesure (11) destiné à superposer des éléments optiques auxiliaires (12) aux verres (21) d'une paire de lunettes particulière (16), lesquelles lunettes (16) comportent des première et deuxième régions de verre (25) et un élément de monture (22) s'étendant entre celles-ci, l'accessoire comprenant
des premier et deuxième éléments optiques auxiliaires (12) séparés,
un élément de liaison élastique (13) s'étendant entre lesdits premier et deuxième éléments optiques (12) et s'étendant le long d'au moins une partie du bord supérieur de chacun desdits éléments optiques (12),
des première et deuxième agrafes (17) fixées aux régions d'extrémité opposées dudit élément de liaison (13) et attachées chacune au bord supérieur de l'élément adjacent parmi lesdits éléments optiques (12), chacune desdites première et deuxième agrafes (17) comportant une broche d'accouplement de lunettes (19) s'étendant vers l'arrière de celle-ci,
des troisième et quatrième agrafes (18) attachées à des éléments séparés parmi lesdits premier et deuxième éléments optiques (12) à des emplacements sur ceux-ci qui sont espacés vers le bas des emplacements desdites première et deuxième agrafes (17) et qui sont plus espacés que les emplacements desdites première et deuxième agrafes (17), lesdites troisième et quatrième agrafes (18) comportant également des broches d'accouplement de lunettes (19) s'étendant vers l'arrière à partir de celles-ci, **caractérisé en ce que** : les fixations desdites troisième et quatrième agrafes (18) auxdits éléments optiques (12) sont indépendantes des fixations desdites première et deuxième agrafes (17) à ceux-ci ;
les premier et deuxième éléments optiques auxiliaires séparés sont taillés afin de présenter des périmètres sensiblement conformes auxdites régions de verre (25) de ladite paire de lunettes particulière (16) ;
et les troisième et quatrième agrafes sont attachées aux périmètres respectifs des éléments optiques une fois qu'ils ont été taillés afin d'être sensiblement conformes auxdites régions de verre (25) de ladite paire de lunettes particulière (16).

2. Accessoire à pinces selon la revendication 1, dans lequel lesdites première et deuxième agrafes comportent chacune un passage transversal (29) de section en forme de U, lesdits bords supérieurs desdits éléments optiques (12) étant reçus dans lesdits passages.

3. Accessoire à pinces selon la revendication 2, comprenant, de plus, un adhésif durci (31) disposé dans lesdits passages (29) desdites première et deuxième agrafes (17) afin de fixer lesdites agrafes auxdits éléments optiques (12), ledit adhésif (31) étant d'un type qui est soluble par un solvant, de telle manière que ledit accessoire puisse être désassemblé et que ses composants puissent être réassemblés en un autre accessoire à pinces présentant des proportions différentes.

4. Accessoire à pinces (11) selon la revendication 1, dans lequel ledit élément de liaison élastique (13) est sous tension lorsqu'il est en prise sur lesdites lunettes (16) et rapproche lesdits éléments optiques (12) lorsqu'il est retiré desdites lunettes (16).

5. Accessoire à pinces (11) selon la revendication 1, dans lequel ledit élément de liaison (13) présente une longueur qui est ajustable pendant l'assemblage dudit accessoire (11) afin de positionner lesdits éléments optiques (12) dans l'alignement avec ladite région de verre (25) de ladite paire de lunettes particulière (16).

6. Accessoire à pinces sur mesure (11) selon la revendication 1 ou la revendication 2, dans lequel au moins l'une des première et deuxième agrafes (17) comporte des moyens pour permettre la fixation de l'agrafe à un emplacement sélectionné le long dudit élément de liaison (13) pendant l'assemblage dudit accessoire (11).

7. Accessoire à pinces (11) selon la revendication 6 telle que dépendant de la revendication 2, dans lequel ledit passage (29) s'étend totalement à travers l'agrafe, de telle manière que l'agrafe puisse être glissée le long dudit élément de liaison (13) pendant l'assemblage dudit accessoire (11) afin de sélectionner ladite longueur dudit élément de liaison (13).

8. Accessoire à pinces (11) selon la revendication 7, dans lequel lesdits bords desdits éléments optiques (12) sont reçus dans les parties inférieures desdits passages (29) et lesdites extrémités dudit élément de liaison (13) sont reçues dans les parties supérieures desdits passages (29).

9. Accessoire à pinces (11) selon la revendication 3, dans lequel l'adhésif durci (31) fixe lesdites extrémités dudit élément de liaison auxdites agrafes.

10. Procédé de fabrication sur mesure d'un accessoire à pinces (11) destiné à être fixé sur une paire de lunettes particulière (16) utilisant des composants qui sont initialement adaptables à diverses configurations de lunettes différentes, comprenant les étapes consistant à :
préparer un contour (37) des régions de verre (25) de la paire de lunettes particulière (16),
faire correspondre une paire d'éléments optiques auxiliaires (12) avec ledit contour en taillant les régions marginales des éléments optiques qui sont initialement d'une plus grande étendue que lesdites régions de verre (25),
aligner lesdits éléments optiques (12) taillés avec le contour desdites régions de verre afin d'amener lesdits éléments optiques à avoir un espacement sélectionné qui correspond à l'espacement desdites régions de verre (25) desdites lunettes (16), et
relier lesdits éléments optiques (12) l'un à l'autre en étendant un élément de liaison élastique (13) entre eux et le long d'au moins une partie du bord supérieur de chacun desdits éléments optiques (12) et en fixant les régions d'extrémité dudit élément de liaison (13) aux bords supérieurs desdits éléments optiques (12) au moyen de première et deuxième agrafes (17) fixées aux régions d'extrémité opposées dudit élément de liaison (13) et attachées chacune au bord supérieur de l'élément adjacent parmi lesdits éléments optiques (12),
fixer des troisième et quatrième agrafes (18) à des éléments séparés parmi lesdits éléments optiques à des emplacements sur ceux-ci qui sont espacés vers le bas des emplacements desdites première et deuxième agrafes (17), **caractérisé en ce que** : les fixations desdites troisième et quatrième agrafes (18) auxdits éléments optiques (12) sont indépendantes des fixations desdites première et deuxième agrafes (17) à ceux-ci.

11. Procédé selon la revendication 10, comprenant l'étape supplémentaire consistant à appliquer une pression audit élément de liaison élastique (13) tandis que lesdits éléments présentent ledit espacement sélectionné et à relâcher par la suite ladite pression tout en empêchant un mouvement relatif desdits éléments optiques (12) et desdites agrafes (17, 18), de telle manière que les parties inférieures desdits éléments optiques (12) soient rapprochées par la détente dudit élément de liaison élastique (13).

12. Procédé selon la revendication 10, comprenant, de plus, les étapes consistant à :
glisser au moins l'une desdites agrafes (17) le long de l'élément de liaison (13) afin d'établir un espacement sélectionné des éléments optiques (12) qui correspond à l'espacement desdites régions de verre (25) de ladite paire de lunettes particulière (16).

13. Procédé selon la revendication 12, comprenant, de plus, l'étape consistant à couper les parties d'extrémité dudit élément de liaison (13) qui débordent desdites agrafes (17) à la suite de la fixation desdites agrafes audit élément de liaison (13).

14. Procédé selon la revendication 10, dans lequel les agrafes (17) sont pourvues de broches d'accouplement de lunettes (19) qui s'étendent vers l'arrière de celles-ci, comprenant les étapes supplémentaires consistant à fixer l'une d'une deuxième paire d'agrafes (18) avec des broches d'accouplement de lunettes (19) s'étendant vers l'arrière à chacun desdits éléments optiques (12) à des emplacements sur ceux-ci qui se trouvent au-dessous desdites régions de bord supérieur desdits éléments (12).

15. Procédé selon la revendication 10, comprenant, de plus, l'étape consistant à utiliser un adhésif soluble (31) pour fixer lesdites agrafes (17) audit élément de liaison et comprenant les étapes supplémentaires consistant à adapter ledit accessoire (11) à une autre paire de lunettes en dissolvant ledit adhésif (31) et en séparant les composants dudit accessoire (11) et en réassemblant lesdits composants en tant qu'accessoire de configuration modifiée.

16. Procédé selon la revendication 12, comprenant, de plus l'étape consistant à utiliser la configuration courbée vers le haut de l'élément de liaison (13) et comprenant, de plus, les étapes consistant à :
appliquer une pression audit élément de liaison (13) afin de réduire sa courbure.

17. Procédé selon la revendication 10, lequel procédé comprend, de plus, les étapes consistant à :
déterminer l'espacement desdites régions de verre (21) l'une par rapport à l'autre,
disposer les parties d'extrémité opposées d'un élément de liaison élastique (13) dans les passages transversaux (29) des agrafes supérieures (17).

18. Kit pour permettre l'assemblage d'un accessoire à pinces (11) qui est ajustable sur mesure à une paire de lunettes (16) spécifique, lesquelles lunettes comportent une paire de verres correcteurs séparés (21) reliés par un élément de monture (22), dans lequel ledit kit comprend :
une paire d'éléments optiques auxiliaires (12) destinés à être disposés devant les régions de verre (25) desdites lunettes (16), lesquels éléments optiques (12) sont chacun d'une taille supérieure à celle desdits verres (21),
un élément de liaison élastique (13) présentant une longueur suffisante pour permettre la modification de l'espacement desdits éléments optiques (12) afin de les adapter à des lunettes (16) de différentes tailles et configurations,
des première et deuxième agrafes (17) adaptées pour être fixées aux régions d'extrémité opposées dudit élément de liaison (13) et étant attachées chacune au bord supérieur de l'élément adjacent desdits éléments optiques (12),
des troisième et quatrième agrafes (18) adaptées pour être fixées à des éléments séparés parmi lesdits éléments optiques à des emplacements sur ceux-ci qui sont espacés vers le bas des emplacements desdites première et deuxième agrafes (17),
**caractérisé en ce que** : les fixations desdites troisième et quatrième agrafes (18) auxdits éléments optiques (12) sont indépendantes des fixations desdites première et deuxième agrafes (17) à ceux-ci.

19. Kit selon la revendication 18, dans lequel le passage transversal (29) permet le glissement de l'agrafe (17) le long de l'élément de liaison pendant l'assemblage.
